(19) Europäisches Patentamt
European Patent Office
Office européen des brevets

(11) **EP 4 160 765 A1**

(12) **EUROPEAN PATENT APPLICATION**
published in accordance with Art. 153(4) EPC

(43) Date of publication:
**05.04.2023   Bulletin 2023/14**

(21) Application number: 20943005.7

(22) Date of filing: **30.06.2020**

(51) International Patent Classification (IPC):
***H01M 10/0525*** (2010.01)   ***H01M 10/0585*** (2010.01)

(52) Cooperative Patent Classification (CPC):
**H01M 10/0525; H01M 10/0585; Y02E 60/10;
Y02P 70/50**

(86) International application number:
**PCT/CN2020/099308**

(87) International publication number:
**WO 2022/000273 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Zhangwan Town, Jiaocheng District
Ningde City
Fujian 352100 (CN)**

(72) Inventors:
• XIAO, Liangzhen
  **Ningde City, Fujian 352100 (CN)**
• HU, Qiaoshu
  **Ningde City, Fujian 352100 (CN)**
• ZENG, Qiao
  **Ningde City, Fujian 352100 (CN)**

(74) Representative: **Icosa
83 avenue Denfert-Rochereau
75014 Paris (FR)**

(54) **ELECTROCHEMICAL DEVICE AND ELECTRONIC DEVICE COMPRISING SAME**

(57)     This application relates to an electrochemical device and an electronic device including the electrochemical device. The electrochemical device includes: an electrode assembly and a first adhesive tape. The electrode assembly includes a body portion and a first metal portion. The body portion includes a first surface and a second surface opposite to the first surface. The first metal portion includes a third surface and a fourth surface opposite to the third surface. The body portion includes a first part and a second part in a first direction, and the first part is electrically connected to the first metal portion. A junction between the first part and the first metal portion in the first direction is a first boundary line, and a junction between the first part and the second part is a second boundary line. The first adhesive tape includes a first tape edge and a third tape edge opposite to the first tape edge. The first adhesive tape is disposed on the first surface of the first part and the third surface of the first metal portion. Viewed from a direction perpendicular to the first surface of the second part, the first tape edge is located between the first boundary line and the second boundary line.

FIG. 3

**(Cont. next page)**

3

304a

31

301

302

303a

303

303b

30

FIG. 3

**Description**

**TECHNICAL FIELD**

This application relates to the technical field of energy storage, and in particular, to an electrochemical device and an electronic device containing the electrochemical device.

**BACKGROUND**

With the progress of science and technology and higher requirements imposed on environment protection, electrochemical devices have penetrated everyday life. Due to the universal application of lithium-ion batteries, most mobile devices such as mobile phones, notebook computers, and electric vehicles are powered by electrochemical devices (such as lithium-ion batteries) nowadays. Therefore, structural stability and cycle performance of the electrochemical devices are attracting more and more attention.

An electrode assembly of an electrochemical device includes a positive electrode plate and a negative electrode plate. An ion transmission distance at edges of the positive electrode plate and the negative electrode plate is longer than that in a middle position of the electrochemical device because the positive electrode plate and the negative electrode plate are not in close contact. An interface between the positive electrode plate and the negative electrode plate at the edges is prone to be abnormal. Consequently, problems such as lithium plating at the edge of the negative electrode plate or black-fleck-induced failure are prone to occur during charge-and-discharge cycles, ending in a decline of overall performance of the electrochemical device.

Therefore, a technical solution to such problems is urgently needed in this field.

**SUMMARY**

This application provides an electrochemical device and an electronic device that contains the electrochemical device in an attempt to solve at least one problem in the related art to at least some extent.

According to an aspect of this application, some embodiments of this application provide an electrochemical device, including:

an electrode assembly, where the electrode assembly includes a body portion and a first metal portion, the body portion includes a first surface and a second surface opposite to the first surface, the first metal portion includes a third surface and a fourth surface opposite to the third surface, the body portion includes a first part and a second part in a first direction, the first part is electrically connected to the first metal portion, a junction between the first part and the first metal portion in the first direction is a first boundary line, a junction between the first part and the second part is a second boundary line, a thickness of the first part is h (mm), a thickness of the second part is H (mm) and is a constant, and h is less than H; and

a first adhesive tape, where the first adhesive tape includes a first tape edge and a third tape edge opposite to the first tape edge, the first adhesive tape is disposed on the first surface of the first part and the third surface of the first metal portion, and, viewed from a direction perpendicular to the first surface of the second part, the first tape edge is located between the first boundary line and the second boundary line.

According to another aspect of this application, some embodiments of this application provide an electronic device. The electronic device contains the electrochemical device.

In the electrochemical device according to this application, the first adhesive tape is disposed on the body portion of the electrode assembly, and a position relationship between the first tape edge and the body portion is adjusted, so as to optimize the interface of an electrode plate edge in the electrode assembly and alleviate lithium plating at the edge, and in turn, improve safety performance and cycle performance. Moreover, the disposed first adhesive tape can coat a bonding region between the adapter strip and the first metal portion, thereby preventing weld-induced burrs in the bonding region from piercing a packaging shell of the electrochemical device, protecting integrity of the electrochemical device, and in turn, improving safety performance of the electrochemical device and the electronic device.

Additional aspects and advantages of some embodiments of this application will be partly described or illustrated later herein or expounded through implementation of an embodiment of this application.

**BRIEF DESCRIPTION OF DRAWINGS**

For ease of describing an embodiment of this application, the following outlines the drawings needed for describing an embodiment of this application or the prior art. Evidently, the drawings outlined below are merely a part of embodiments in this application.

FIG. 1 is a structural sectional view of an electrode plate;
FIG. 2 is a structural sectional view of an electrode assembly;
FIG. 3 is a structural sectional view of an electrochemical device according to some embodiments of this application;
FIG. 4 is a structural sectional view of an electrochemical device according to some embodiments of this application;
FIG. 5 is a structural sectional view of an electrochemical device according to some embodiments of this application;
FIG. 6 is a simplified structural side view of an electrochemical device according to some embodiments of this application;
FIG. 7 is a simplified structural top view of an electrochemical device according to some embodiments of this application;
FIG. 8 is a simplified structural side view of an electrochemical device according to some embodiments of this application;
FIG. 9 is a simplified structural side view of an electrochemical device according to some embodiments of this application;
FIG. 10 is a simplified structural side view of an electrochemical device according to some embodiments of this application;
FIG. 11 is a structural sectional view of an electrochemical device according to some embodiments of this application; and
FIG. 12 is a structural sectional view of an electrode plate according to some embodiments of this application.

## DETAILED DESCRIPTION OF EMBODIMENTS

Some embodiments of this application are described in detail below. Throughout the specification of this application, the same or similar components and the components serving the same or similar functions are represented by similar reference numerals. An embodiment described herein with reference to the drawings is descriptive and illustrative in nature, and is intended to enable a basic understanding of this application. No embodiment of this application is to be construed as a limitation on this application.

In this specification, unless otherwise specified or defined, relative terms such as "central", "longitudinal", "lateral", "front", "rear", "right", "left", "internal", "external", "lower", "higher", "horizontal", "vertical", "higher than", "lower than", "up", "down", "top", "bottom", and derivatives thereof (such as "horizontally", "downward", and "upward") are intended to be construed as a reference to a direction described in the context or a direction illustrated in the drawings. Such relative terms are merely used for ease of description, but not intended to require a structure to be constructed or an operation to be performed in a given direction according to this application.

In addition, a quantity, a ratio, or another numerical value herein is sometimes expressed in the format of a range. Understandably, such a range format is set out for convenience and brevity, and needs to be flexibly understood to include not only the numerical values explicitly specified and defined by the range, but also all individual numerical values or sub-ranges covered in the range as if each individual numerical value and each sub-range were explicitly specified.

Further, for ease of description, "first", "second", "third", and the like may be used herein to distinguish between different components in one drawing or a series of drawings. Unless otherwise expressly specified or defined, the terms "first", "second", "third", and the like are not intended to describe the corresponding components.

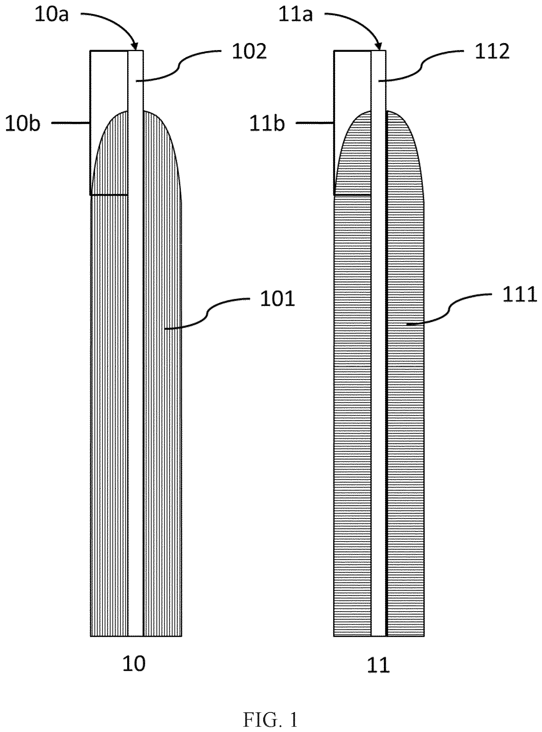

In the field of electrochemical devices, an existing manufacturing process is limited in some aspects, for example, the coating amount at the edge of an electrode plate during the coating is relatively low, or the active material layer is broken at the edge of the electrode plate, and therefore, a thickness of an active material layer of the electrode plate at the edge of the electrode plate is prone to decline gradually. Consequently, the thickness of the active material layer at the edge of the electrode plate is less than the thickness of the active material layer in the middle of the electrode plate. At the same time, some regions at the edge of the electrode plate are not coated with the active material layer, so that an thinned region of the electrode plate is formed at the edge of the electrode plate. FIG. 1 is a schematic diagram of a thinned region of a first electrode plate and a second electrode plate at the edges thereof.

As shown in FIG. 1, the first electrode plate 10 includes a first active material layer 101 and a first current collector 102. The second electrode plate 11 includes a second active material layer 111 and a second current collector 112. The thickness of the first active material layer 101 or the second active material layer 111 in the first electrode plate 10 and the second electrode plate 11 respectively decreases in the region close to the electrode plate edges 10a and 11a until the surface of the current collector 102 or 112 is exposed. This reduces the thickness of the entire electrode plate, thereby forming thinned regions 10b and 11b at the edges of the electrode plates. Understandably, the first electrode plate or the second electrode plate is merely used to distinguish between different electrode plate types. In some embodiments, the first electrode plate is a positive electrode plate, the first active material layer is a positive active material layer, and the first current collector is a positive current collector. Accordingly, the second electrode plate is a negative electrode plate, the second active material layer is a negative active material layer, and the second current collector is a negative current collector. In other embodiments, the first electrode plate is a negative electrode plate, the first active material layer is a negative active material layer, and the first current collector is a negative current collector. Accordingly, the second electrode plate is a positive electrode plate, the second active material layer is a positive active material layer, and the second current collector is a positive current collector.

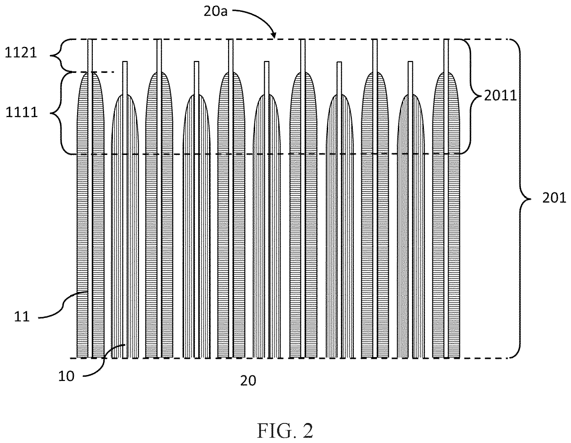

FIG. 2 is a schematic sectional view of a body portion of an electrode assembly formed by winding or stacking a plurality of electrode plates. As shown in FIG. 2, a plurality of first electrode plates 10 and second electrode plates 11 are wound or stacked to form a body portion 201 of the electrode assembly 20. Thinned regions of a plurality of electrode plates are superimposed. For example, partial regions 1111 of the second active material layers included in the second electrode plates 11 are superimposed, and extended exposed regions 1121 of the second current collectors are superimposed. In this way, a part 2011 of the body portion 201, which is close to an edge 20a of the electrode assembly, decreases gradually in thickness. Consequently, an edge part of the electrode assembly is prone to be detached and deformed, and the lithium plating may occur due to uneven distribution of the active material in the edge part.

In addition, the surface of the metal portion (not shown in FIG. 2) (such as the tab part) electrically connected to the body portion in the electrode assembly 20 is prone to corrosion, lithium plating, or a short circuit. Therefore, a protective adhesive tape needs to be affixed to the edge part of the electrode assembly to protect and fix the body portion and the metal portion of the electrode assembly. The position and thickness of the protective adhesive tape exert an impact on the performance of the electrochemical device. If the protective adhesive tape is not affixed to the thinned region of the electrode plate or the thickness is excessive or deficient, the interface at the edge of the electrode assembly will be relatively unstable, and lithium plating or black flecks are prone to occur at the edge of the electrode assembly during charge-and-discharge cycles.

According to an aspect of this application, some embodiments of this application provide an electrochemical device. By limiting the position and thickness of the protective adhesive tape on the electrode assembly, this application improves the interface stability at the edge of the electrode assembly.

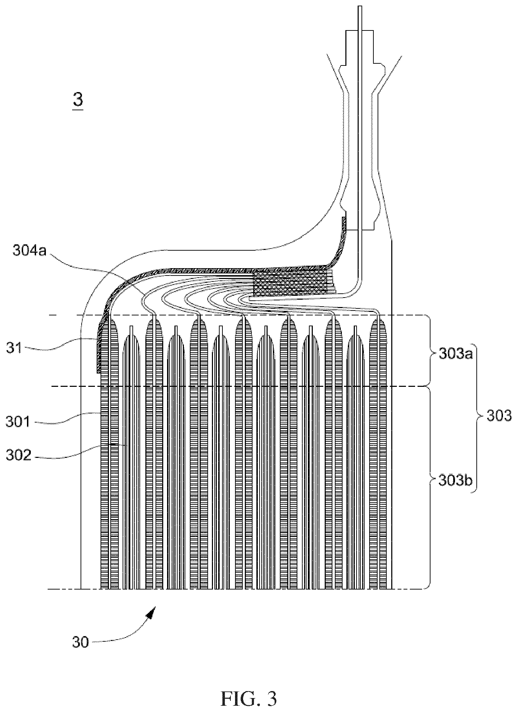

FIG. 3 is a structural sectional view of an electrochemical device according to some embodiments of this application.

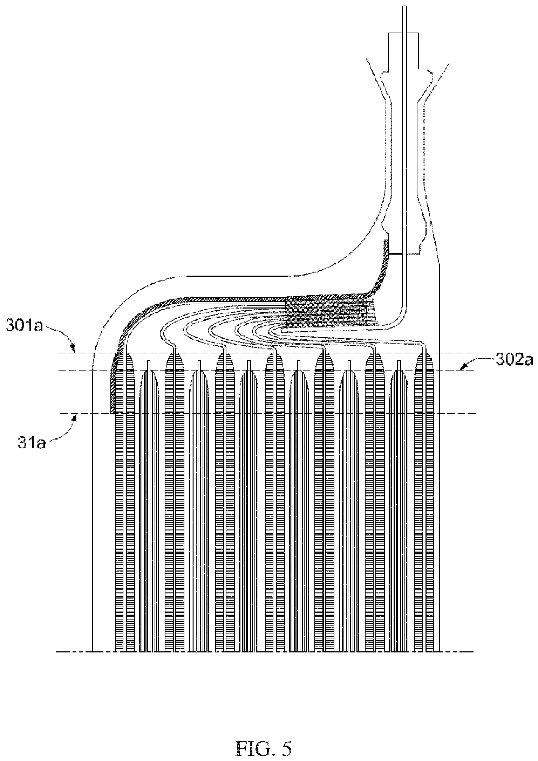

As shown in FIG. 3, the electrochemical device 3 includes an electrode assembly 30 and a first adhesive tape 31. The electrode assembly 30 includes a first electrode plate 301, a second electrode plate 302, and a separator (not shown in FIG. 3). The separator is disposed between the first electrode plate 301 and the second electrode plate 302. In the first direction, a plurality of first electrode plates 301 and a plurality of second electrode plates 302 constitute a body portion 303 of the electrode assembly, and a plurality of first tabs connected to the first electrode plates 301 constitute a first metal portion 304 of the electrode assembly 30. Further, referring to FIG. 3 and FIG. 5, in the first direction, an edge coated with a first active material layer on the first electrode plate 301 is a first electrode plate edge 301a, and an edge coated with a second active material layer on the second electrode plate 302 is a second electrode plate edge 302a. The first electrode plate edge 301a and the second electrode plate edge 302a correspond to the edges of the active material layers of the first electrode plate and the second electrode plate respectively, correspond to the regions from which the coating of the active material layer starts. Thinned regions of electrode plates are formed at a part of the first electrode plate 301, which is close to the first electrode plate edge, and a part of the second electrode plate 302, which is close to the second electrode plate edge. The thinned regions of the electrode plates divide the body portion 303 of the electrode assembly 30 into a first part 303a affected by the thinned regions of the electrode plates, and a second part 303b not affected by the thinned regions of the electrode plates. The first metal portion includes a third surface and a fourth surface opposite to the third surface.

In some embodiments, the electrode assembly 30 further includes a second metal portion (not shown in FIG. 3) formed of a plurality of second tabs (not shown in FIG. 3) connected to the second electrode plates 302.

By disposing the first adhesive tape 31 on the first part 303a of the body portion 303 in the electrode assembly 30 and the surface of the first metal portion 304, or on the first part 303a and the surface of the second metal portion, this application protects and fixes the edge part of the electrode assembly 30, enables the thinned regions of the first electrode plates and the second electrode plates to bond more firmly, shortens the ion transmission distance, makes the interface more stable at the edge of the electrode assembly, and in turn, enhances the cycle performance and safety performance of the electrochemical device.

In this application, the first part of the electrode assembly, which is affected by the thinned region of the electrode plate, is defined by the following method: measuring the thickness of the electrode assembly in the middle of the electrode assembly with an instrument (such as a small-probe micrometer), where the probe is 1 mm in diameter, and H represents the thickness of the body portion of the electrode assembly (equivalent to the thickness of the second part); subsequently, measuring points at intervals of 1 mm in the first direction of the electrode assembly, and, when the thickness of a test point is less than (H-0.01) mm, defining this point as a boundary point between the first part and the second part.

Understandably, the first adhesive tape according to this application may be disposed at all edges that may be affected by the thinned regions of the electrode plates on the electrode assembly, including the edge in the length direction of the electrochemical device and the edge in the width direction of the electrochemical device. In some embodiments, the first direction is the length direction or width direction of the electrode assembly. In some other embodiments, the first direction may be any planar direction perpendicular to a corresponding edge in the electrode assembly.

In some embodiments, the electrode assembly is a jelly-roll type structure or a stacked type structure.

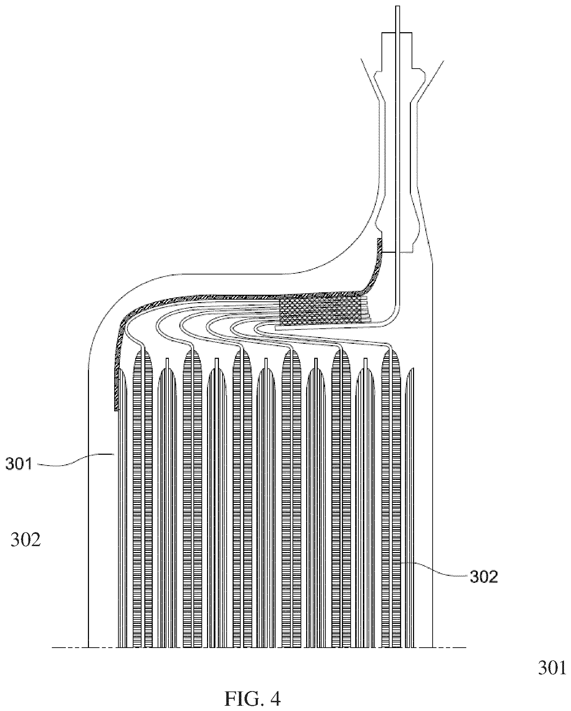

Understandably, as shown in FIG. 4, the outermost side of the electrode assembly may be either the first electrode plate or the second electrode plate, and may be either an electrode plate coated an active material layer on a single side or an electrode plate coated an active material layer on both sides, without being limited to the electrode assembly shown in FIG. 3 in which the outermost side is an electrode plate coated with an active material layer on both sides.

As shown in FIG. 5, in some embodiments, in the first direction, viewed from a direction perpendicular to the first surface of the second part, the second electrode plate edge 302a is located between the first tape edge 31a and the first electrode plate edge 301a.

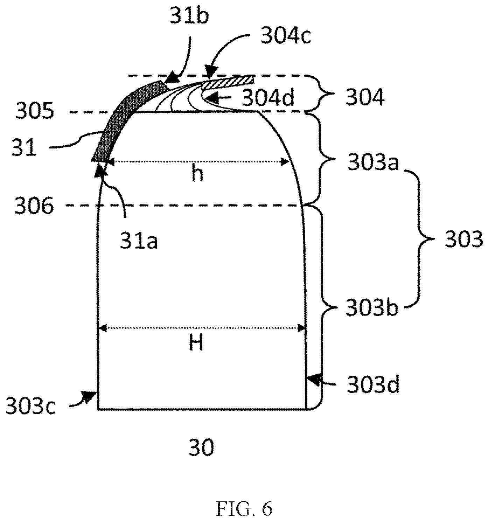

FIG. 6 is a simplified structural sectional view of an electrochemical device according to some embodiments of this application.

As shown in FIG. 6, the electrochemical device includes an electrode assembly 30 and a first adhesive tape 31. The electrode assembly 30 includes a body portion 303 and a first metal portion 304. The body portion 303 includes a first surface 303c and a second surface 303d opposite to the first surface 303c. The first metal portion 304 includes a third surface 304c and a fourth surface 304d opposite to the third surface 304c. In the first direction, the body portion 303 includes a first part 303a affected by the thinned region of the electrode plate, and a second part 303b not affected by the thinned region of the electrode plate. The thickness h (mm) of the body portion 303 in the first part 303a is less than the thickness H (mm) of the body portion in the second part 303b. The first part 303a is electrically connected to the first metal portion 304. The junction between the first part and the first metal portion in the first direction is a first boundary line 305, and a junction between the first part and the second part is a second boundary line 306. The first adhesive tape 31 includes a first tape edge 31a and a third tape edge 31b opposite to the first tape edge 31a. The first adhesive tape 31 is disposed on the first surface 303c of the first part 303a and the third surface 304c of the first metal portion 304. Viewed from a direction perpendicular to the first surface 303c of the second part 303b, the first tape edge 31a is located between the first boundary line 305 and the second boundary line 306.

In some embodiments, the third surface 304c of the first metal portion 304 is fully provided with the first adhesive tape 301. In some embodiments, the third surface 304c of the first metal portion 304 is partly provided with the first adhesive tape 31.

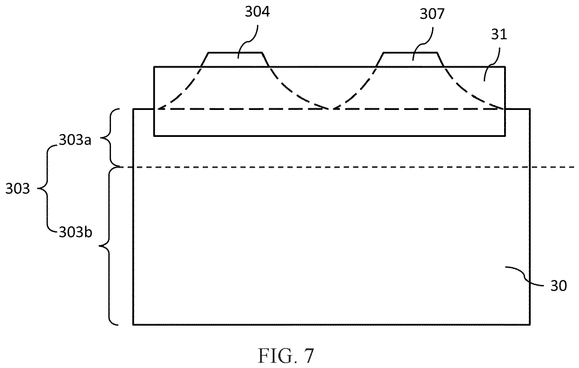

FIG. 7 is a simplified structural side view of an electrochemical device according to some embodiments of this application.

As shown in FIG. 7, the electrode assembly 30 includes a first metal portion 304 and a second metal portion 307. The second metal portion includes a fifth surface and a sixth surface (not shown in FIG. 7) opposite to the fifth surface. The first adhesive tape 31 is disposed on the first surface of the first part 303a of the body portion 303, the third surface of the first metal portion 304, and the fifth surface of the second metal portion 307. Understandably, to the extent not departing from the spirit of this application, depending on specific preparation or usage requirements, the first adhesive tape may be disposed on just the first part of the body portion and the first metal portion, or disposed on just the first part of the body portion and the second metal portion, or, usually as shown in FIG. 7, disposed on the first part of the body portion, the first metal portion, and the second metal portion concurrently.

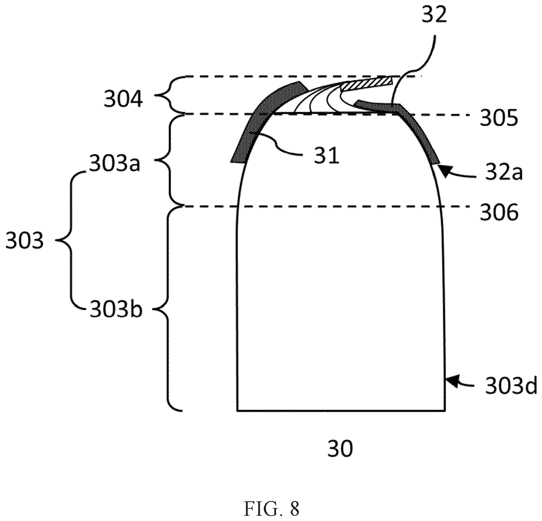

Referring to FIG. 8, in some embodiments of this application, the electrochemical device further includes a second adhesive tape 32. The second adhesive tape includes a second tape edge 32a. The second adhesive tape is disposed on the second surface 303d of the first part 303a of the body portion 303. Viewed from a direction perpendicular to the second surface 303d of the second part 303b, the second tape edge 32a is located between the first boundary line 305 and the second boundary line 306.

In some embodiments, the second adhesive tape may be further disposed on the fourth surface of the first metal portion. In some embodiments, the second adhesive tape may be further disposed on the sixth surface of the second metal portion. Understandably, the first metal portion or the second metal portion may be a combination of curved or irregular tab bundles. To the extent not departing from the spirit of this application, the second adhesive tape may fully or partly overlay the fourth surface of the first metal portion or the sixth surface of the second metal portion to fix or coat the first metal portion or the second metal portion. In some embodiments, the fourth surface of the first metal portion is fully provided with the second adhesive tape. In some embodiments, the fourth surface of the first metal portion is partly provided with the second adhesive tape. In some embodiments, the first adhesive tape and the second adhesive tape each independently include a substrate layer and an bonding layer. The material of the substrate layer may include a polymer substrate such as polyethylene terephthalate, polyethylene, polypropylene, polyimide, polytetrafluoroethylene, or polyvinyl chloride. The material of the bonding layer may include one or more of acrylate, polyurethane, rubber, or silicone. In some embodiments, the bonding layer is disposed on one side or both sides of the substrate layer, and the first adhesive tape or the second adhesive tape bonds and fixes the electrode assembly through the bonding layer.

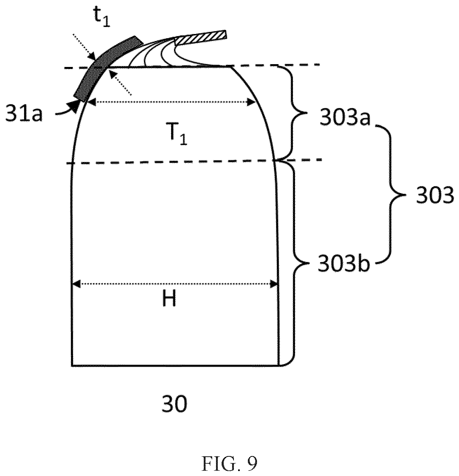

Referring to FIG. 9, in some embodiments, the thickness $t_1$ of the first adhesive tape of the electrochemical device, the thickness of the first part 303a of the electrode assembly 30 corresponding to the first tape edge 31a, and the thickness H of the body portion 303 of the electrode assembly satisfy the following relation:

$$0.47 \times H \leq 0.5 \times (T_1 + t_1) \leq 0.52 \times H.$$

In the formula above, $T_1$ represents the thickness of the first part corresponding to the first tape edge, and $t_1$ represents the thickness of the first adhesive tape.

Understandably, the structural diagram shown in FIG. 9 illustrates just the first adhesive tape, and is intended to illustrate the relationship between the thickness of the adhesive tape, the thickness of the first part of the body portion corresponding to the tape edge, and the thickness of the second part of the body portion. Similarly, in some embodiments, the thickness of the second adhesive tape of the electrochemical device, the thickness of the first part of the electrode assembly corresponding to the second tape edge, and the thickness of the body portion of the electrode assembly also satisfy the foregoing relation, that is,

$$0.47 \times H \leq 0.5 \times (T_2 + t_2) \leq 0.52 \times H.$$

In the formula above, $T_2$ represents the thickness of the first part corresponding to the second tape edge, and $t_2$ represents the thickness of the second adhesive tape.

In some embodiments, a sum of the thickness of the first adhesive tape and the thickness of the second adhesive tape of the electrochemical device, the thickness of the first part of the electrode assembly corresponding to the first tape edge or the second tape edge, and the thickness of the body portion of the electrode assembly also satisfy the relation, that is,

$$0.47 \times H \leq 0.5 \times (T_1 + T_2 + t_1 + t_2) \leq 0.52 \times H.$$

In some embodiments, the thickness of the first adhesive tape and the thickness of the second adhesive tape range from 0.01 mm to 0.5 mm.

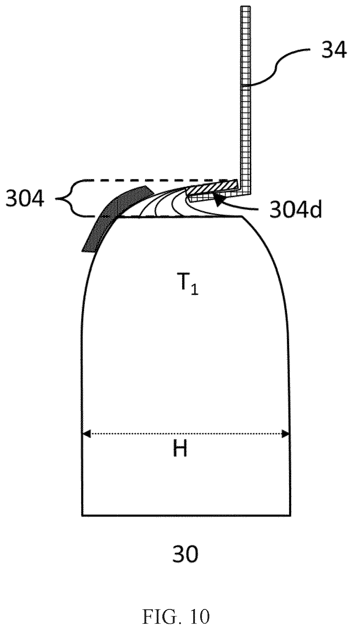

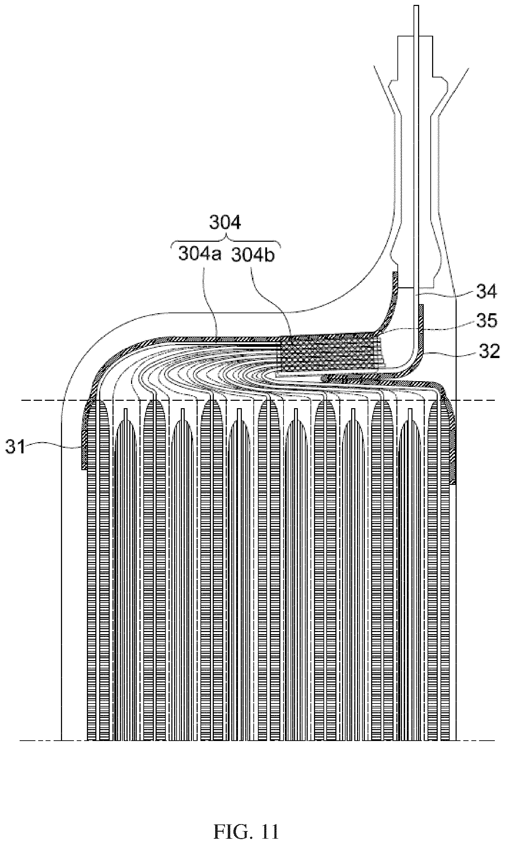

FIG. 10 and FIG. 11 are schematic structural diagrams of electrically connecting to a tab bundle of an electrode assembly by use of an adapter strip at an edge of the electrode assembly of an electrochemical device according to some embodiments of this application.

As shown in FIG. 10, in some embodiments, the electrochemical device further includes an adapter strip 34. The adapter strip 34 is connected to the fourth surface 304d of the first metal portion 304, and the adapter strip 34 is electrically connected to the first metal portion 304. In some embodiments, the connection between the adapter strip and the metal portion may be implemented by a technique commonly used in the art, for example, by welding or bonding.

As shown in FIG. 11, in some embodiments, the first metal portion 304 includes a first tab 304a and a tab bonding region 304b. The tab bonding region 304b overlaps a part of the adapter strip 34 to form an overlap part. A gel 35 is disposed at the overlap part. The gel 35 can coat and protect the overlap region between the tab bonding region 304b of the first metal portion 304 and the adapter strip 34 to reduce the impact or extrusion caused by the tab bonding region 304b to an aluminum plastic film and an inner electrode plate during shaking of the battery, thereby ensuring the integrity of the electrochemical device and improving the safety performance of the electrochemical device. Understandably, the first adhesive tape 31, the second adhesive tape 32, or the gel 35 each may be applied to different embodiments of this application independently or in any other combined manners although the embodiment shown in FIG. 10 includes the first adhesive tape 31, the second adhesive tape 32, and the gel 35 concurrently.

Understandably, although the metal portion 304 of the electrode assembly 30 in FIG. 10 and FIG. 11 adopts a tab bundle structure formed of a plurality of tabs, the drawings are merely schematic diagrams for illustrating the connection structure between the first metal portion 304 and the adapter strip 34.

In some embodiments, the first metal portion or the second metal portion is a single-tab structure. In some embodiments, the first metal portion or the second metal portion is a dual-tab structure. In some embodiments, the first metal portion or the second metal portion is a multi-tab structure. In some embodiments, the shape of the tab in the first metal portion or the second metal portion may be strip-like, sheet-like, plate-like, bundle-like, and so on, without being limited herein.

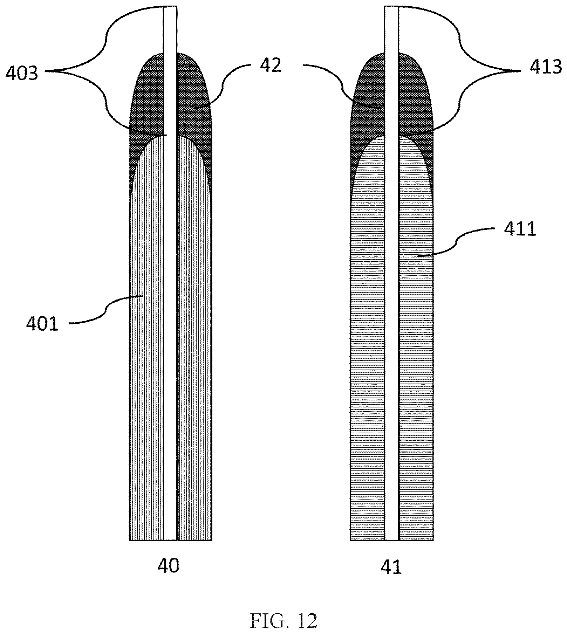

Referring to FIG. 12, as shown in FIG. 12, in some embodiments, the first electrode plate 40 containing an extended current collector 403 or the second electrode plate 41 containing an extended current collector 413 further includes an inorganic material layer 42. The inorganic material layer 42 is disposed on surfaces of the extended current collectors 403 and 413. In some embodiments, the inorganic material layer may be further disposed on the surface of the tab included in the first metal portion of the electrode assembly. The inorganic material layer further protects the tab, prevents a short circuit between the tab or current collector of the first electrode plate or second electrode plate and that of an adjacent electrode plate, and further enhances the safety performance of the electrochemical device.

In some embodiments, the thickness of the inorganic material layer 42 is less than or equal to a maximum thickness of a single-side active material layer 401 or 402 of the first electrode plate 40 or second electrode plate 41.

In some embodiments, the inorganic material layer 42 is contiguous to the positive active material layer 401 or negative active material layer 411. In some embodiments, when the first electrode plate and the second electrode plate are stacked or wound to form an electrode assembly, the length of the inorganic material layer disposed on the second electrode plate in the first direction is greater than or equal to a distance between a first electrode plate edge and a second electrode plate edge that are adjacent to the inorganic material layer.

In some embodiments, when the first electrode plate and the second electrode plate are stacked or wound to form an electrode assembly, the edge of the inorganic material layer 41 disposed on the second electrode plate, which is away from the second active material layer, extends beyond the first electrode plate edge of the adjacent first electrode plate 40.

In some embodiments, the inorganic material layer includes an inorganic material. The inorganic material includes at least one of aluminum oxide, silicon dioxide, magnesium oxide, titanium oxide, hafnium dioxide, tin oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide, or barium sulfate.

Understandably, to the extent not departing from the spirit of this application, the method for preparing the electrochemical device according to this application may be any appropriate preparation method in the art, and is not limited to the illustrated method.

Some embodiments of this application further provide an electronic device. The electronic device includes the electrochemical device according to an embodiment of this application.

The electronic device according to an embodiment of this application is not particularly limited, and may be any electronic device known in the prior art. In some embodiments, the electronic device may include, but without being limited to, an electronic cigarette device, electronic vaporizer, wireless headset, robot cleaner, unmanned aerial vehicle, notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

**Embodiments**

Some specific embodiments are enumerated below, on which a cycle performance test and a lithium plating test are performed to describe this application more clearly. A person skilled in the art understands that the preparation methods described in this application are merely exemplary, and any other appropriate preparation methods still fall within the scope of this application.

I. Test methods

1.1 Testing the cycle performance:

Putting a lithium-ion battery in each of the following embodiments and comparative embodiments into a 25 °C±2 °C thermostat, leaving the battery to stand for 2 hours, charging the battery at a constant current of 0.5 C until the voltage reaches 4.4 V, charging the battery at a constant voltage of 4.4 V until the current reaches 0.02 C, and leaving the battery to stand for 15 minutes; and discharging the battery at a constant current of 0.5 C until the voltage reaches 3.0 V, thereby completing one charge-and-discharge cycle. Recording a first-cycle discharge capacity of the lithium-ion battery. Repeating the charge-and-discharge cycle according to the foregoing method, recording a discharge capacity at the end of each charge-and-discharge cycle, and then comparing the discharge capacity with the first-cycle discharge capacity to obtain a cycle capacity curve.

Testing the batteries in groups, where each group includes 4 lithium-ion batteries, and calculating an average of cycle capacity retention rates of the lithium-ion batteries: cycle capacity retention rate of each lithium-ion battery = (500th-cycle discharge capacity (mAh)/first-cycle discharge capacity (mAh) $\times$ 100%.

1.2 Lithium plating test:

Putting a lithium-ion battery in each of the following embodiments and comparative embodiments into a 25 °C±2 °C thermostat, and leaving the battery to stand for 2 hours. Charging the battery at a constant current of 3 C until the voltage reaches 4.4 V, and then charging the battery at a constant voltage of 4.4 V until the current reaches 0.02 C, leaving the battery to stand for 15 minutes, and then discharging the battery at a constant current of 0.5 C until the voltage reaches 3.0 V, thereby completing one lithium plating test cycle. Repeating the lithium plating test cycle for 100 cycles, and then discharging the lithium-ion battery at a constant current of 0.5 C until the voltage reaches 3.00 V. Subsequently, disassembling the lithium-ion battery, and checking whether lithium plating occurs on the surface of the negative active material layer. A gray position indicates lithium plating, and absence of gray positions indicates no lithium plating.

**Embodiment 1**

Stacking a positive electrode plate, a separator, and a negative electrode plate in sequence, and then winding the stacked structure to form an electrode assembly. Measuring the electrode assembly with a small-probe micrometer to obtain the relevant parameters affected by thinned regions of the electrode plates: the length of the first part of the body portion is 12 mm, and the thickness of the second part of the body portion is 4.5 mm.

Disposing a first adhesive tape on a surface of the electrode assembly near the edge of the electrode assembly in the length direction (perpendicular to the winding direction). To be specific, affixing the first adhesive tape to a part of the surface of the first part of the body portion of the electrode assembly and the surface of the metal portion connected thereto, where the first tape edge is located between the first boundary line and the second boundary line. Table 1 shows specific settings of parameters such as the thickness of the electrode assembly corresponding to the first tape edge, the thickness of the adhesive tape, and the overlay length on the body portion. Putting the electrode assembly with the adhesive tape into a housing, and injecting an electrolytic solution. Performing steps such as vacuum sealing, static standing, chemical formation, and shaping to obtain a finished-product lithium-ion battery.

**Embodiments 2 to 5 and Embodiments 8 to 11**

In Embodiments 2 to 5 and Embodiments 8 to 11, the preparation method is identical to that in Embodiment 1, but differs from Embodiment 1 in the thickness of the electrode assembly corresponding to the first tape edge, the thickness of the adhesive tape, or the overlay length on the body portion, as detailed in Table 1.

**Embodiments 6 to 7 and Embodiment 12**

In Embodiments 6 to 7 and Embodiment 12, the preparation method is identical to that in Embodiment 1 except that, during the disposition of the first adhesive tape, a second adhesive tape is further disposed on the surface back from the surface on which the first adhesive tape is disposed, where the specific settings of parameters are shown in Table 1, such as the thickness of the electrode assembly corresponding to the first tape edge or second tape edge, the thickness of the adhesive tape, the overlay length on the body portion, and the final position relationship.

**Embodiment 13**

In Embodiment 13, the preparation method is identical to that in Embodiment 12 except that a gel is further disposed on the overlap part between the tab and the adapter strip.

**Comparative Embodiment 1**

Identical to Embodiment 1 in terms of the preparation method except that, in Comparative Embodiment 1, no first adhesive tape is disposed on the electrode assembly in the lithium-ion battery.

**Comparative Embodiment 2**

Identical to Embodiment 1 in terms of the preparation method except that in Comparative Embodiment 2, the first adhesive tape is affixed onto the surface of the first part of the electrode assembly and partly affixed onto a part of the surface of the second part, with the first tape edge extending beyond the second boundary line. The specific settings of parameters are shown in Table 1.

Table 1 shows settings of parameters of the adhesive tape and the electrode assembly in different embodiments.

**Table 1**

| Embodiment | Thickness of first part corresponding to first or second tape edge $T_1$ or $T_2$ (mm) | Thickness of first adhesive tape $t_1$ (mm) | Thickness of second adhesive tape $t_2$ (mm) | Amount of length by which the first/second adhesive tape overlays the body portion in the first direction (mm) | First tape edge or second tape edge is located |
|---|---|---|---|---|---|
| Comparative Embodiment 1 | - | - | - | - | - |
| Comparative Embodiment 2 | 4.5 | 0.2 | - | 14 | beyond second boundary line |
| Embodiment 1 | 4.2 | 0.05 | - | 4 | between first boundary line and second boundary line |
| Embodiment 2 | 4.2 | 0.3 | - | 4 | between first boundary line and second boundary line |
| Embodiment 3 | 4.2 | 0.46 | - | 4 | between first boundary line and second boundary line |
| Embodiment 4 | 4.2 | 0.02 | - | 4 | between first boundary line and second boundary line |
| Embodiment 5 | 4.2 | 0.6 | - | 4 | between first boundary line and second boundary line |
| Embodiment 6 | 4.2 | 0.2 | 0.2 | 4 | between first boundary line and second boundary line |
| Embodiment 7 | 4.2 | 0.3 | 0.15 | 4 | between first boundary line and second boundary line |
| Embodiment 8 | 4.3 | 0.3 | - | 5 | between first boundary line and second boundary line |
| Embodiment 9 | 4.35 | 0.2 | - | 6 | between first boundary line and second boundary line |

(continued)

| Embodiment | Thickness of first part corresponding to first or second tape edge $T_1$ or $T_2$ (mm) | Thickness of first adhesive tape $t_1$ (mm) | Thickness of second adhesive tape $t_2$ (mm) | Amount of length by which the first/second adhesive tape overlays the body portion in the first direction (mm) | First tape edge or second tape edge is located |
|---|---|---|---|---|---|
| Embodiment 10 | 4.45 | 0.15 | - | 10 | between first boundary line and second boundary line |
| Embodiment 11 | 4.1 | 0.5 | - | 2 | between first boundary line and second boundary line |
| Embodiment 12 | 4.35 | 0.15 | 0.15 | 6 | between first boundary line and second boundary line |
| Embodiment 13 | 4.35 | 0.15 | 0.15 | 6 | between first boundary line and second boundary line |

After a finished-product lithium-ion battery in an embodiment or comparative embodiment is measured, the capacity, thickness, width, and length of the finished product is recorded, so as to determine the volumetric energy density of the lithium-ion battery. Subsequently, a cycle performance test and a lithium plating test are performed on the finished-product lithium-ion batteries in the foregoing embodiments. Table 2 shows experimental parameters and measurement results in each embodiment and comparative embodiment.

Table 2

| Embodiment | $0.47 \times H \leq 0.5 \times (T_1 + t_1) \leq 0.52 \times H$ or $0.47 \times H \leq 0.5 \times (T_1 + T_2 + t_1 + t_2) \leq 0.52 \times H$ satisfied | Maximum thickness of electrode assembly and adhesive tape (mm) | Position of maximum thickness of electrode assembly and adhesive tape | Lithium plating on the first part? | Lithium plating on the second part? | 500th-cyde capacity retention rate | Volumetric energy density (Wh/L) |
|---|---|---|---|---|---|---|---|
| Comparative Embodiment 1 | - | 4.5 | - | Yes | No | 72% | 690 |
| Comparative Embodiment 2 | - | 4.7 | Second part | No | No | 84% | 670 |
| Embodiment 1 | Yes | 4.5 | Second part | No | No | 81% | 689 |
| Embodiment 2 | Yes | 4.5 | Second part | No | No | 83% | 689 |
| Embodiment 3 | Yes | 4.5 | Second part | No | No | 85% | 689 |
| Embodiment 4 | No | 4.5 | Second part | Yes | No | 76% | 690 |

(continued)

| Embodiment | $0.47 \times H \leq 0.5 \times (T_1 + t_1) \leq 0.52 \times H$ or $0.47 \times H \leq 0.5 \times (T_1 + T_2 + t_1 + t_2) \leq 0.52 \times H$ satisfied | Maximum thickness of electrode assembly and adhesive tape (mm) | Position of maximum thickness of electrode assembly and adhesive tape | Lithium plating on the first part? | Lithium plating on the second part? | 500th-cyde capacity retention rate | Volumetric energy density (Wh/L) |
|---|---|---|---|---|---|---|---|
| Embodiment 5 | No | 4.6 | First part | No | Yes | 83% | 681 |
| Embodiment 6 | Yes | 4.5 | Second part | No | No | 85% | 688 |
| Embodiment 7 | Yes | 4.5 | Second part | No | No | 85% | 689 |
| Embodiment 8 | Yes | 4.5 | Second part | No | No | 84% | 689 |
| Embodiment 9 | Yes | 4.5 | Second part | No | No | 84% | 689 |
| Embodiment 10 | Yes | 4.5 | Second part | No | No | 85% | 688 |
| Embodiment 11 | Yes | 4.5 | Second part | No | No | 83% | 689 |
| Embodiment 12 | Yes | 4.5 | Second part | No | No | 86% | 690 |
| Embodiment 13 | Yes | 4.5 | Second part | No | No | 86% | 690 |

As can be seen from Comparative Embodiment 1 versus Embodiments 1 to 3 as shown in Table 1 and Table 2 above, by disposing the adhesive tape in the thinned region of the electrode plate of the electrode assembly and controlling the position and other parameters of the adhesive tape, this application effectively enhances the cycle performance of the electrochemical device and alleviates the lithium plating of the electrochemical device during the cycling.

As can be seen from the comparison between Embodiments 1 to 5, when the thickness $t_1$ of the first adhesive tape, and the thickness $T_1$ of the first part of the body portion corresponding to the position of the first tape edge, and the thickness H of the body portion of the electrode assembly satisfy $0.47 \times H \leq 0.5 \times (T_1 + t_1) \leq 0.52 \times H$, the lithium plating of the electrode assembly can be effectively suppressed, and the lithium-ion battery achieves a relatively high cycle capacity retention rate. In contrast, in Embodiment 4, a half of the sum of the thickness $t_1$ of the first adhesive tape and the thickness $T_1$ of the first part of the body portion corresponding to the position of the first tape edge is not greater than 0.47H, so that the first adhesive tape is not enough to protect the first part of the electrode assembly, and in turn, lithium plating occurs on the first part. In Embodiment 5, a half of the sum of the thickness $t_1$ of the first adhesive tape and the thickness $T_1$ of the first part of the body portion corresponding to the position of the first tape edge is not less than 0.52H, so that the first adhesive tape presses the second part of the body portion during sealing and leads to lithium plating of the second part.

As can be seen from Embodiments 1 and 8 to 11 versus Comparative Embodiment 2, when the position of the first tape edge satisfies the range specified in an embodiment of this application, a relatively stable interface is formed at the electrode plate edge in the electrode assembly, so that the lithium-ion battery achieves a high cycle capacity retention rate and a high volumetric energy density. When the adhesive tape is disposed on the surface of the second part of the electrode assembly, the thickness is not evenly distributed at the boundary of the electrode assembly due to the protruding adhesive tape, thereby leading to a plunge in the energy density of the lithium-ion battery.

As shown in Embodiments 6, 7, and 12, the lithium-ion batteries coated with the adhesive tape on both sides also achieve high cycle capacity retention rates and energy densities.

As shown in Embodiments 12 and 13, a drop test that is further performed on the batteries in Embodiments 12 and 13 shows that the lithium-ion batteries with a gel achieve relatively high anti-drop performance. When impacted by an external force, the lithium-ion batteries (8/10) in Embodiment 13 exhibit higher safety performance than the lithium-ion batteries (4/10) in Embodiment 12.

A person skilled in the art understands that although the lithium-ion battery is used as an example for describing the foregoing embodiments and comparative embodiments, a person skilled in the art who has read this application can learn that the adhesive tape arrangement in this application is applicable to other appropriate electrochemical devices. Through comparison between the foregoing embodiments, it is clearly understood that the electrochemical devices equipped with the adhesive tape according to this application exhibit higher safety performance and cycle performance.

Although illustrative embodiments have been demonstrated and described above, a person skilled in the art understands that the foregoing embodiments are not to be construed as a limitation on this application, and changes, replacements, and modifications may be made to the embodiments without departing from the spirit, principles, and scope of this application.

**Claims**

1. An electrochemical device, comprising:

   an electrode assembly, wherein the electrode assembly comprises a body portion and a first metal portion, the body portion comprises a first surface and a second surface opposite to the first surface, the first metal portion comprises a third surface and a fourth surface opposite to the third surface, the body portion comprises a first part and a second part in a first direction, the first part is electrically connected to the first metal portion, a junction between the first part and the first metal portion in the first direction is a first boundary line, a junction between the first part and the second part is a second boundary line, a thickness of the first part is h (mm), a thickness of the second part is H (mm) and is a constant, and h is less than H; and
   a first adhesive tape, wherein the first adhesive tape comprises a first tape edge and a third tape edge opposite to the first tape edge, the first adhesive tape is disposed on the first surface of the first part and the third surface of the first metal portion, and, viewed from a direction perpendicular to the first surface of the second part, the first tape edge is located between the first boundary line and the second boundary line.

2. The electrochemical device according to claim 1, wherein the electrochemical device further comprises a second adhesive tape, the second adhesive tape comprises a second tape edge, the second adhesive tape is disposed on the second surface of the first part, and, viewed from a direction perpendicular to the second surface of the second part, the second tape edge is located between the first boundary line and the second boundary line.

3. The electrochemical device according to any one of claims 1 to 2, wherein the electrochemical device satisfies the following relation:

$$0.47 \times H \leq 0.5 \times (T_1 + t_1) \leq 0.52 \times H$$

wherein $T_1$ (mm) represents the thickness of the first part corresponding to the first tape edge, and $t_1$ (mm) represents a thickness of the first adhesive tape.

4. The electrochemical device according to claim 2, wherein the electrochemical device satisfies the following relation:

$$0.47 \times H \leq 0.5 \times (T_1 + T_2 + t_1 + t_2) \leq 0.52 \times H$$

wherein $T_1$ (mm) represents the thickness of the first part corresponding to the first tape edge, $T_2$ (mm) represents the thickness of the first part corresponding to the second tape edge, $t_1$ (mm) represents a thickness of the first adhesive tape, and $t_2$ (mm) represents a thickness of the second adhesive tape.

5. The electrochemical device according to any one of claims 3 to 4, wherein $t_1$ ranges from 0.01 to 0.5, and $t_2$ ranges from 0.01 to 0.5.

6. The electrochemical device according to claim 1, wherein the electrochemical device further comprises an adapter strip, and the adapter strip is electrically connected to the fourth surface of the first metal portion.

7. The electrochemical device according to claim 6, wherein the first metal portion overlaps the adapter strip, and a gel is applied to an overlap part.

8. The electrochemical device according to claim 1, wherein the third surface of the first metal portion is fully provided with the first adhesive tape.

9. The electrochemical device according to claim 1, wherein the first metal portion comprises at least one first tab, a surface of the first tab is further provided with an inorganic material layer, the inorganic material layer comprises an inorganic material, and the inorganic material comprises at least one of aluminum oxide, silicon dioxide, magnesium oxide, titanium oxide, hafnium dioxide, tin oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide, or barium sulfate.

10. The electrochemical device according to claim 1, wherein the electrode assembly further comprises a second metal portion, the second metal portion comprises at least one second tab, a surface of the second tab is further provided with an inorganic material layer, the inorganic material layer comprises an inorganic material, and the inorganic material comprises at least one of aluminum oxide, silicon dioxide, magnesium oxide, titanium oxide, hafnium dioxide, tin oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide, or barium sulfate.

11. The electrochemical device according to claim 10, wherein the second metal portion comprises a fifth surface and a sixth surface opposite to the fifth surface, and the first adhesive tape is further disposed on the fifth surface of the second metal portion.

12. The electrochemical device according to claim 1, wherein the first direction is a length direction or a width direction of the electrode assembly.

13. The electrochemical device according to claim 1, wherein the electrode assembly comprises a first electrode plate, a separator, and a second electrode plate, and the separator is disposed between the first electrode plate and the second electrode plate; in the first direction, the first electrode plate comprises a first electrode plate edge, and the second electrode plate comprises a second electrode plate edge; and, viewed from a direction perpendicular to the first surface of the second part, the second electrode plate edge is located between the first tape edge and the first electrode plate edge.

14. The electrochemical device according to claim 1, wherein the first electrode plate is a positive electrode plate or a negative electrode plate, and the second electrode plate is of a polarity opposite to the first electrode plate.

15. The electrochemical device according to claim 1, wherein the electrode assembly is of a jelly-roll structure or a stack structure.

16. An electronic device, wherein the electronic device comprises the electrochemical device according to any one of claims 1 to 15.

FIG. 1

FIG. 2

FIG. 3

FIG. 4

301a

302a

31a

FIG. 5

FIG. 6

304    307    31

303a

303

303b

30

FIG. 7

FIG. 8

FIG. 9

FIG. 10

FIG. 11

FIG. 12

## INTERNATIONAL SEARCH REPORT

| International application No. |
| --- |
| **PCT/CN2020/099308** |

| A. | CLASSIFICATION OF SUBJECT MATTER |
| --- | --- |

H01M 10/0525(2010.01)i; H01M 10/0585(2010.01)i

According to International Patent Classification (IPC) or to both national classification and IPC

| B. | FIELDS SEARCHED |
| --- | --- |

Minimum documentation searched (classification system followed by classification symbols)

    H01M

Documentation searched other than minimum documentation to the extent that such documents are included in the fields searched

Electronic data base consulted during the international search (name of data base and, where practicable, search terms used)

    CNPAT, WPI, EPODOC, CNKI: 电池, 电极, 极板, 极片, 厚度, 薄, 绝缘, 胶纸, battery, electrode, plate, thickness, thin, insulat +, tape

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109088091 A (AUTOMOTIVE ENERGY SUPPLY CORP.) 25 December 2018 (2018-12-25)<br>    description, paragraphs 0019-0081, and figures 1-7 | 1-2, 6-8, 12-16 |
| X | CN 111293277 A (SHENZHEN EPT BATTERY CO., LTD.) 16 June 2020 (2020-06-16)<br>    description, paragraphs 0007-0039, and figures 1-4 | 1-2, 6-8, 12-16 |
| X | US 2017309887 A1 (NEC ENERGY DEVICES, LTD.) 26 October 2017 (2017-10-26)<br>    description, paragraphs 0041-0078, and figures 1-2 | 1-2, 6-8, 12-16 |
| Y | CN 111326699 A (NINGDE CONTEMPORARY AMPEREX TECHNOLOGY CO., LTD.) 23 June 2020 (2020-06-23)<br>    description, paragraphs 0053-0092, and figures 3-14 | 9-11 |
| Y | CN 109088091 A (AUTOMOTIVE ENERGY SUPPLY CORP.) 25 December 2018 (2018-12-25)<br>    description, paragraphs 0019-0081, and figures 1-7 | 9-11 |
| A | CN 108258193 A (HUNAN SANXUN NEW ENERGY TECHNOLOGY CO., LTD.) 06 July 2018 (2018-07-06)<br>    entire document | 1-16 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 March 2021** | **26 March 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/099308**

| Patent document cited in search report | | | Publication date (day/month/year) | Patent family member(s) | | | Publication date (day/month/year) |
|---|---|---|---|---|---|---|---|
| CN | 109088091 | A | 25 December 2018 | US | 2018366786 | A1 | 20 December 2018 |
| | | | | JP | 2019003789 | A | 10 January 2019 |
| | | | | US | 10505231 | B2 | 10 December 2019 |
| | | | | EP | 3416215 | A1 | 19 December 2018 |
| CN | 111293277 | A | 16 June 2020 | None | | | |
| US | 2017309887 | A1 | 26 October 2017 | JP | 6609564 | B2 | 20 November 2019 |
| | | | | US | 10468662 | B2 | 05 November 2019 |
| | | | | EP | 3211695 | B1 | 08 January 2020 |
| | | | | EP | 3211695 | A4 | 02 May 2018 |
| | | | | JP | WO2016063612 | A1 | 14 September 2017 |
| | | | | EP | 3211695 | A1 | 30 August 2017 |
| | | | | CN | 107078271 | B | 03 January 2020 |
| | | | | WO | 2016063612 | A1 | 28 April 2016 |
| | | | | CN | 107078271 | A | 18 August 2017 |
| CN | 111326699 | A | 23 June 2020 | None | | | |
| CN | 108258193 | A | 06 July 2018 | None | | | |

Form PCT/ISA/210 (patent family annex) (January 2015)